# EUROPEAN PATENT SPECIFICATION

(11) **EP 1 683 144 B1**
(45) Date of publication and mention of the grant of the patent: **02.07.2008**
(21) Application number: 04791773.7
(22) Date of filing: 28.10.2004
(51) Int. Cl.: G11B 7/24

(54) **INFORMATION CARRIER COMPRISING A DATA LAYER AND A DETECTION LAYER**
INFORMATIONSTRÄGER MIT EINER DATENSCHICHT UND EINER DETEKTIONSSCHICHT
SUPPORT D'INFORMATIONS COMPORTANT UNE COUCHE DE DONNEES ET UNE COUCHE D'INFORMATIONS

(30) Priority: 05.11.2003 EP 03300197
(43) Date of publication of application: 26.07.2006
(73) Proprietor: Koninklijke Philips Electronics N.V., 5621 BA Eindhoven (NL)
(72) Inventor: KURT, Ralph, 75008 Paris (FR); HENDRIKS, Robert Frans Maria, 75008 Paris (FR); HUIBERTS, Johannes Nicolaas, 75008 PARIS (FR)
(74) Representative: van Oudheusden-Perset, Laure E.
(86) International application number: PCT/IB2004/003614
(87) International publication number: WO 2005/045817

(56) References cited:
- WO-A-01/29835
- US-B1- 6 291 132

## Description

### FIELD OF THE INVENTION

The invention relates to types of information carriers intended to store data, and methods of defining data patterns in such information carriers.

The invention may be used in the field of optical data storage.

### BACKGROUND OF THE INVENTION

The use of optical storage is widespread for content distribution nowadays, for example in storage systems based on the DVD (Digital Versatile Disc) standards. Optical storage has a big advantage over hard-disc and solid-state storage in that the information carrier are easy and cheap to replicate.

However, due to the large amount of moving parts in the drives, known applications using this type of storage are not robust to shocks when performing read operations, considering the required stability of said moving parts during such operations. As a consequence, known optical storage solutions cannot easily be used in applications which are subject to shocks, such as in portable devices.

US Patent 6,291,132 B1 describes a method of manufacturing a fluorescent 3-D optical memory device implementing an active medium capable of storing information at high information density, and an optical memory device manufactured by this method. In particular it discloses a method of defining a data pattern in an active medium by illuminating the medium using a collimated laser beam to "bleach" selected spots of the medium surface. To read the data pattern, a separate optical apparatus comprising macroscopic optical elements is used. Therefore reading might be disturbed when the apparatus is subject to shocks.

International Application WO 01/29835 A1 proposes a device for a bit-by-bit data retrieval from a multilayer fluorescent optical clear card, when a source of reading radiation and a CCD camera for detecting the reading signal are positioned on the same or different sides of an optical card. The macroscopic separation between data storage medium and data reading element suggests that data reading could be disturbed by mechanical shocks.

### OBJECT AND SUMMARY OF THE INVENTION

It is an object of the invention to propose an information carrier comprising:
- a mask layer defining a data pattern,
- a detection layer stacked on said mask layer and comprising at least one segment made of organic photosensitive material embedded between electrodes for detecting said data pattern.

The segments acting as sensors for detecting data are part of the information carrier. In this way, problems with alignment between a data medium and a separate detector are avoided. This information carrier is robust to shocks since it forms a single unit.

In a preferred embodiment, the data pattern is made of transparent and non-transparent elementary areas. This way of coding information is easy and cost-effective.

In a preferred embodiment, each sensor is sized for facing a plurality of elementary areas. This allows increasing the storage capacity in a cost-effective manner.

It is also an object of the invention to propose an information carrier comprising a layer comprising at least one segment, said at least one segment comprising active and passive elementary areas for defining a data pattern, each active area yielding a higher electric current upon irradiation than any passive area, and said at least one segment being made of organic photosensitive material embedded between electrodes for detecting said data pattern.

This information carrier takes advantage of the possibilities of a LED segment to be locally passivated. By this way, the single layer is not only used as a data detector, but also as a data medium. In this embodiment, the mask layer is replaced by a data pattern defined by a sequence of active and passive elementary areas. This information carrier is also robust to shocks since it forms a single unit.

It is also an object of the invention to propose an information carrier comprising a plurality of layers stacked on top of each other, each layer having the characteristics of the layer described above. That is, each layer comprises at least one segment, said at least one segment comprising active and passive elementary areas for defining a data pattern, each active area yielding a higher electric current upon irradiation than any passive area, and said at least one segment being made of organic photosensitive material embedded between electrodes for detecting said data pattern.

This multi-layers embodiment allows increasing the storage capacity.

It is also an object of the invention to propose a method of modifying the data pattern in an information carrier, comprising the step of printing dark elementary areas on said detection layer, wherein the information carrier comprises:
- a mask layer defining a data pattern,
- a detection layer stacked on said mask layer and comprising at least one segment made of organic photosensitive material embedded between electrodes for detecting said data pattern.

It is also an object of the invention to propose a method of modifying the data pattern in an information carrier, comprising the step of modifying the properties of said organic photosensitive material for creating passive elementary areas, wherein the information carrier comprises a layer comprising at least one segment, said at least one segment comprising active and passive elementary areas for defining a data pattern, each active area yielding a higher electric current upon irradiation than any passive area, and said at least one segment being made of organic photosensitive material embedded between electrodes for detecting said data pattern.

It is also an object of the invention to propose a method of modifying the data pattern in an information carrier, comprising the step of suppressing one or several of said electrodes for creating passive elementary areas, wherein the information carrier comprises a layer comprising at least one segment, said at least one segment comprising active and passive elementary areas for defining a data pattern, each active area yielding a higher electric current upon irradiation than any passive area, and said at least one segment being made of organic photosensitive material embedded between electrodes for detecting said data pattern.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
Fig. 1 depicts a first embodiment of a system for reading an information carrier,
Fig.2 depicts a second embodiment of a system for reading an information carrier,
Fig.3 is a detailed view of components used for macro-cell scanning,
Fig.4 illustrates the principle of macro-cell scanning,
Fig.5 is a three-dimensional view of the second system depicted in Fig.2,
Fig.6 depicts a first arrangement for moving the systems depicted in Fig.1 and Fig.2 over an information carrier,
Fig.7 depicts a second arrangement for moving the systems depicted in Fig.1 and Fig.2 over an information carrier,
Fig.8 depicts detailed elements of the second arrangement depicted in Fig.7,
Fig.9 depicts a detector made of an array of LED segments,
Fig.10 depicts a current-voltage curve of a LED segments,
Fig.11 depicts a first information carrier according to the invention,
Fig.12 illustrates an example of data storage in the first information carrier according to the invention,
Fig.13 depicts a second information carrier according to the invention,
Fig.14 illustrates an example of data storage in the second information carrier according to the invention,
Fig.15 depicts a third type of information carrier according to the invention,
Fig.16 illustrates the principle of photo-oxidation of a LED segment.

### DETAILED DESCRIPTION OF THE INVENTION

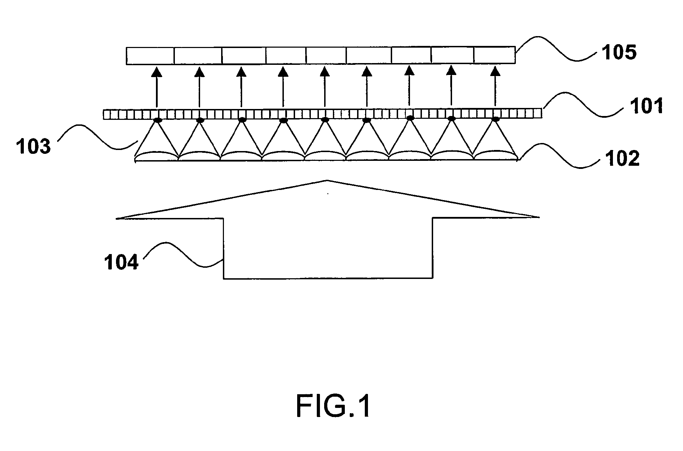

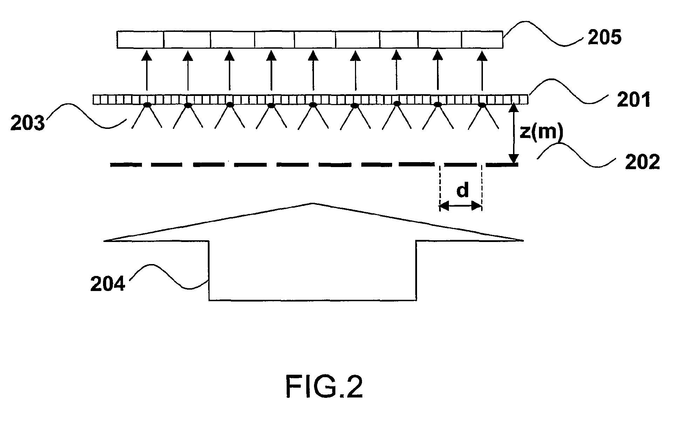

Fig.1 and Fig.2 depicts a first and second embodiment of a system for reading data stored on an information carrier.

The information carrier is intended to store binary data organized in an array (as in a data matrix) and is intended to be read in transmission. The information carrier comprises a mask layer made of glass or plastic. The mask layer comprises substantially transparent and non-transparent areas for defining a data pattern representing states of binary data stored on the information carrier.

The embodiment of Fig.1 comprises an optical element 102 for generating an array of light spots 103 from an input light beam 104, said array of light spots 103 being intended to scan the information carrier 101.

The optical element 102 corresponds to a two-dimensional array of micro-lenses to the input of which the coherent input light beam 104 is applied. The array of micro-lenses 102 is placed parallel and distant from the information carrier 101 so that light spots are focussed on the information carrier. The numerical aperture and quality of the micro-lenses determines the size of the light spots. For example, a two-dimensional array of micro-lenses 102 having a numerical aperture which equals 0.3 can be used. The input light beam 104 can be realized by a waveguide (not shown) for expanding an input laser beam, or by a two-dimensional array of coupled micro lasers.

The light spots are applied on transparent or non-transparent areas of the information carrier 101. If a light spot is applied on a non-transparent area, no output light beam is generated in response by the information carrier. If a light spot is applied on a transparent area, an output light beam is generated in response by the information carrier, said output light beam being detected by the detector 105. The detector 105 is thus used for detecting the binary value of the data of the area to which the optical spot is applied.

The detector 105 is advantageously made of an array of CMOS or CCD pixels. For example, one pixel of the detector is placed opposite an elementary data area containing one data (i.e. one bit) of the information carrier. In that case, one pixel of the detector is intended to detect one data of the information carrier.

The embodiment of Fig.2 comprises an optical element 202 for generating an array of light spots 203 from an input light beam 204, said array of light spots 203 being intended to scan the information carrier 201.

The optical element 202 corresponds to a two-dimensional array of apertures to the input of which the coherent input light beam 204 is applied. The apertures correspond for example to circular holes having a diameter of 1 µm or much smaller. The input light beam 204 may be realized by a waveguide (not shown) for expanding an input laser beam, or by a two-dimensional array of coupled micro lasers.

The light spots are applied to transparent or non-transparent areas of the information carrier 201. If a light spot is applied to a non-transparent area, no output light beam is generated in response by the information carrier. If a light spot is applied to a transparent area, an output light beam is generated in response by the information carrier, said output light beam being detected by the detector 205. Similarly as in the first embodiment depicted in Fig.1, the detector 205 is thus used for detecting the binary value of the data of the area on which the optical spot is applied.

The detector 205 is advantageously made of an array of CMOS or CCD pixels. For example, one pixel of the detector is placed opposite an elementary data area containing a data of the information carrier. In that case, one pixel of the detector is intended to detect one data of the information carrier.

The array of light spots 203 is generated by the array of apertures 202 in which utilizes the Talbot effect which is a diffraction phenomenon working as follows. When a coherent light beams, such as the input light beam 204, is applied to an object having a periodic diffractive structure (thus forming light emitters), such as the array of apertures 202, the diffracted lights recombine into identical images of the emitters at a plane located at a predictable distance z0 from the diffracting structure. This distance z0 is known as the Talbot distance. The Talbot distance z0 is given by the relation z0 = 2.n.d² / λ, where d is the periodic spacing of the light emitters, λ is the wavelength of the input light beam, and n is the refractive index of the propagation space. More generally, re-imaging takes place at other distances z(m) spaced further away from the emitters and which are a multiple of the Talbot distance z such that z(m) = 2.n.m.d² / λ, where m is an integer. Such a re-imaging also takes place for m = ½ + an integer, but here the image is shifted over half a period. The re-imaging also takes place for m = ¼ + an integer, and for m = ¾ + an integer, but the image has a doubled frequency which means that the period of the light spots is halved with respect to that of the array of apertures.

The use of the Talbot effect allows to generate an array of light spots of high quality at a relatively large distance from the array of apertures 202 (a few hundreds of µm, expressed by z(m)), without the need for optical lenses. Thus it is possible, for example, to insert a cover layer between the array of aperture 202 and the information carrier 201 to prevent the latter from contamination (e.g. dust, finger prints ...). Moreover, this facilitates the implementation and allows to increase in a cost-effective manner, compared to the use of an array of micro-lenses, the density of light spots which are applied to the information carrier.

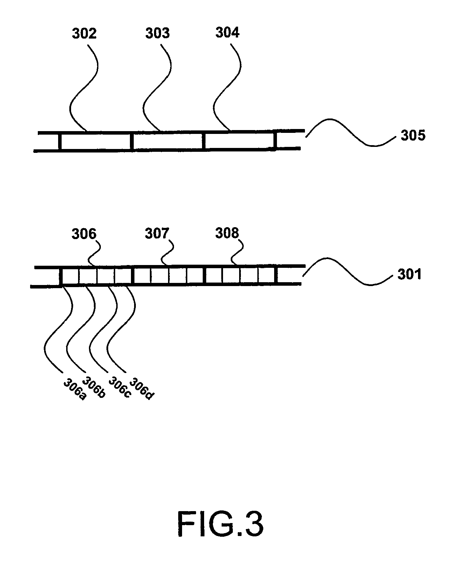

Fig.3 depicts a detailed view of the system according to the invention. It depicts a detector 305 which is intended to detect data from output light beams generated by the information carrier 301. The detector comprises pixels referenced to as 302-303-304, the number of pixels shown being limited for better understanding. In particular, pixel 302 is intended to detect data stored on the data area 306 of the information carrier, pixel 303 is intended to detect data stored on the data area 307, and pixel 304 is intended to detect data stored on the data area 308. Each data area (also called macro-cell) comprises a set of elementary data. For example, data area 306 comprises binary data referred to as 306a-306b-306c-306d.

In this embodiment, one pixel of the detector is intended to detect a set of data, each elementary data among this set of data being successively read by a single light spot generated either by the array of micro-lenses 102 depicted in Fig.1, or by the array of apertures depicted in Fig.2. This way of reading data on the information carrier is called macro-cell scanning in the following.

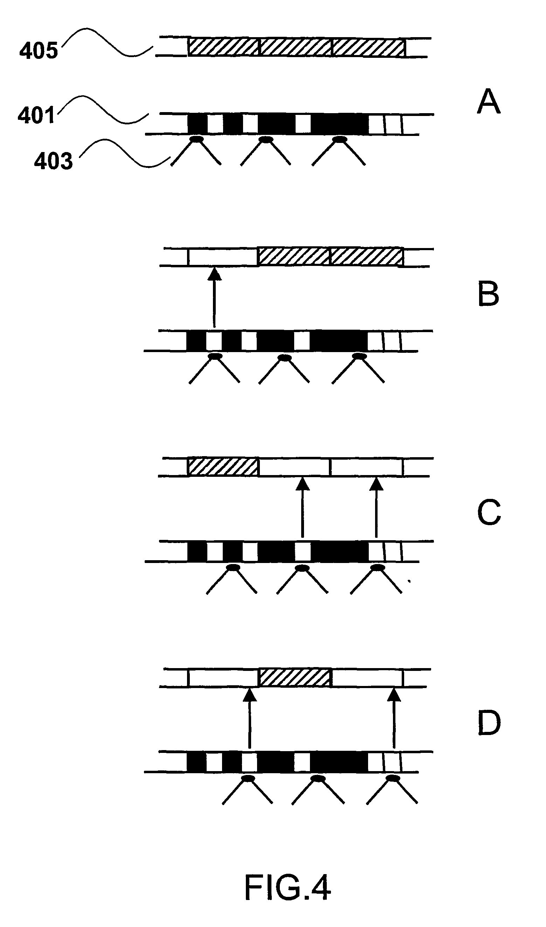

Fig.4, based on Fig.3, illustrates by an example the macro-cell scanning of an information carrier 401.

Data stored on the information carrier 401 have two states indicated either by a black area (i.e. non-transparent) or white area (i.e. transparent). For example, a black area corresponds to a "0" binary state while a white area corresponds to a "1" binary state.

When a pixel of the detector 405 is illuminated by an output light beam generated by the information carrier 401, the pixel is shown as a white area. In that case, the pixel delivers an electric output signal (not shown) having a first state. When a pixel of the detector 405 does not receive any output light beam from the information carrier, however the pixel is shown by a cross-hatched area. In that case, the pixel delivers an electric output signal (not shown) having a second state.

In this example, each set of data comprises four elementary data, and a single light spot is applied simultaneously to each set of data. The scanning of the information carrier 401 by the light spots 403 is performed for example from left to right, with an incremental lateral displacement which equals the distance between two elementary data.

In position A, all the light spots are applied to non-transparent areas so that all pixels of the detector are in the second state.

In position B, after a displacement of the light spots to the right, the light spot to the left is applied to a transparent area so that the corresponding pixel is in the first state, while the two other light spots are applied to non-transparent areas so that the two corresponding pixels of the detector are in the second state.

In position C, after a further displacement of the light spots to the right, the light spot to the left is applied to a non-transparent area so that the corresponding pixel is in the second state, while the two other light spots are applied to transparent areas so that the two corresponding pixels of the detector are in the first state.

In position D, after a yet further displacement of the light spots to the right, the central light spot is applied to a non-transparent area so that the corresponding pixel is in the second state, while the two other light spots are applied to transparent areas so that the two corresponding pixels of the detector are in the first state.

The scanning of the information carrier 401 is complete when the light spots have been applied to all data of a set of data facing a pixel of the detector. It implies a two-dimensional scanning of the information carrier. Elementary data which compose a set of data opposite a pixel of the detector are read successively by a single light spot.

It is noted that instead of reading binary elementary data, the data could be coded at higher resolution, for instance in using multilevel schemes. An example would be a scheme where two elementary bits are detected per pixel, by means of distinguishing four grey levels (0, 1/4, 1/2, 3/4). This would double the data density over a system using a binary coding.

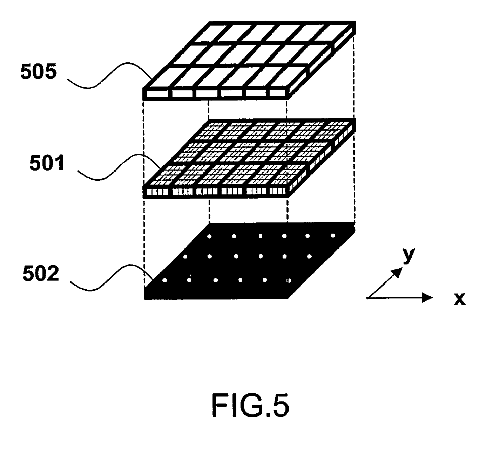

Fig.5 is a three-dimensional view of the system as depicted in Fig.2. It comprises an array of apertures 502 for generating an array of light spots applied to the information carrier 501. Each light spot is applied and scanned over a two-dimensional set of data of the information carrier 501 (represented by bold squares). In response to this light spot, the information carrier generates (or not, if the light spot is applied to a non-transparent area) an output light beam in response, which is detected by the pixel of the detector 505 opposite the set of data which is scanned. The scanning of the information carrier 501 is performed in displacing the array of apertures 502 is displaced along the x and y axes.

The array of apertures 502, the information carrier 501 and the detector 505 are stacked in parallel planes. The only moving part is the array of apertures 502.

It is noted that the three-dimensional view of the system depicted in Fig.1 would be the same as the three-dimensional view of the system depicted in Fig.5 in replacing the array of apertures 502 by an array of micro-lenses.

The scanning of the information carrier by the array of light spots is done in a plane parallel to the information carrier. A scanning device provides translational movement of the light spots in the two directions x and y for scanning the entire surface of the information carrier.

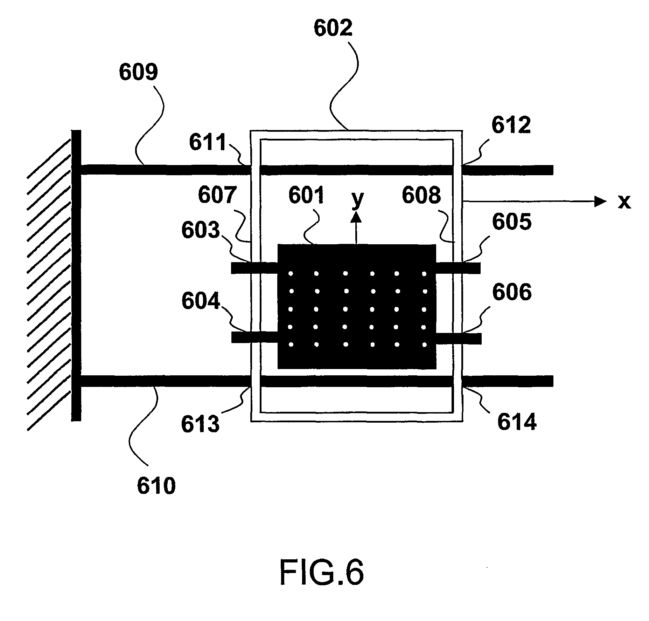

In a first solution depicted in Fig.6, the scanning device corresponds to an H-bridge. The optical element generating the array of light spots (i.e. the array of micro-lenses or the array of apertures) is implemented in a first sledge 601 which is movable along the y axis with respect to a second sledge 602. To this end, the first sledge 601 comprises joints 603-604-605-606 in contact with guides 607-608. The second sledge 602 is movable along the x axis by means of joints 611-612-613-614 in contact with guides 609-610. The sledges 601 and 602 are translated by means of actuators (not represented), such as by step-by-step motors, magnetic or piezoelectric actuators acting as jacks.

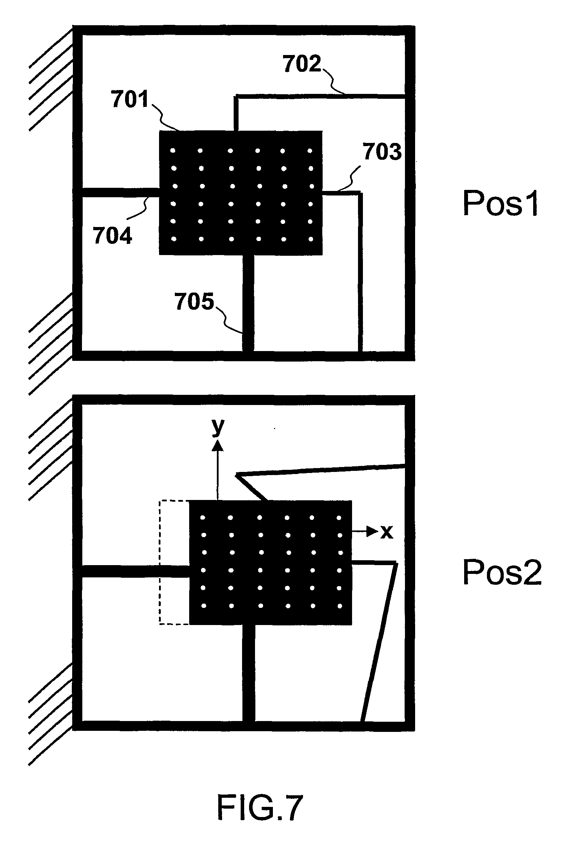

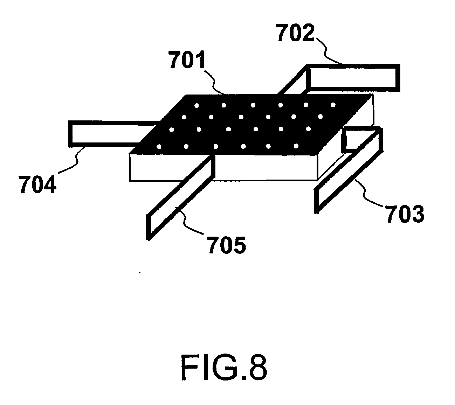

In a second solution depicted in Fig.7, the scanning device is held in a frame 701. The elements used for suspending the frame 701 are depicted in a detailed three-dimensional view in Fig.8. These elements comprise:
- a first leaf spring 702,
- a second leaf spring 703,
- a first piezoelectric element 704 providing the actuation of the scanning device 701 along the x axis,
- a second piezoelectric element 705 providing the actuation of the scanning device 701 along the y axis.

The second solution depicted in Fig.7 has fewer mechanical transmissions than the first solution depicted in Fig.6. The piezoelectric elements, in contact with the frame 701, are electrically controlled (not shown) so that a voltage variation results in a dimension change of the piezoelectric elements, leading to a displacement of the frame 701 along the x and/or the y axis.

The position Pos1 depicts the scanning device 701 in a first position, while the position Pos2 depicts the scanning device 701 in a second position after translation along the x axis. The flexibility of the leaf springs 702 and 703 is put in evidence.

A similar configuration may be built with four piezoelectric elements, the two extra piezoelectric elements replacing the leaf springs 702 and 703. In that case, opposite pairs of piezoelectric elements will act together in one direction in the same way as an antagonistic pair of muscles.

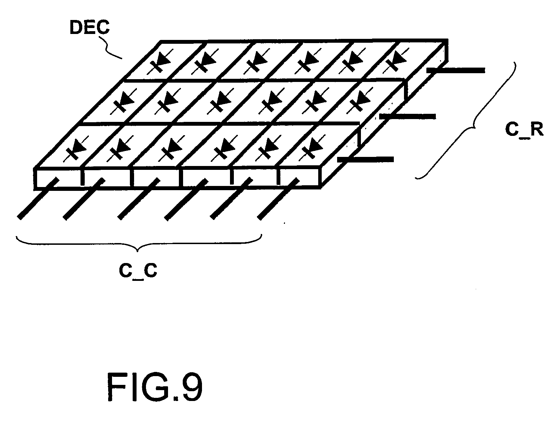

Fig.9 depicts a detector DEC which is an alternative solution of detectors 105-205 used in Fig.1 and Fig.2. The detector DEC is made of an array of segments acting as sensors, each sensor being composed of organic photosensitive material embedded between electrodes.

The segments of the detector are made of organic light-emitting diodes (OLEDs), small-molecule OLEDs (smOLEDs), polymer OLEDs (PolyLED), frozen/doped light-emitting electrochemical cells (LEECs), organic photovoltaic cells, or hybrid organic/inorganic solar cells known as Grätzel cells. These sensors will be referred to as LED segments below.

This detector is equivalent to a pixelated matrix in which each element of the matrix corresponds to a LED segment acting as a sensor. The detector comprises electrical contacts at its periphery : electrical contacts C_R for addressing the rows of the detector, and electrical contacts C_C for addressing the columns of the detectors.

The electrical contacts are both dedicated to receive electric power from a player in which the information carrier is inserted, and to output signals generated by the LED segments to said player.

Every segment of the matrix is driven individually by electronic circuits and logics via the electrical contacts. Electronic circuits and logics may be incorporated directly in the substrate of the detector for defining an active matrix detector. In that case, the state of a plurality of segments acting as sensors can be read simultaneously. Electronic circuits and logics may also be situated externally in the player for defining a passive matrix detector. In that case, no circuitry is incorporated on the substrate apart from feed lines. The reading operation is driven by the addressing of rows and columns such that one row displays information at a time. Changing rows in quick succession builds up a total image of the detector.

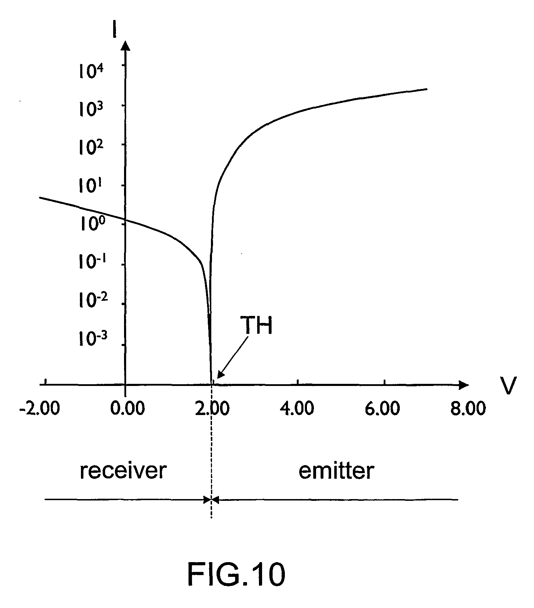

Fig.10 shows a typical current-voltage curve of a LED segment. This Figure shows that a LED segment acts as a light emitter above a polarization threshold TH, whereas below that threshold TH a LED segment acts as a light receiver. In the context of the invention, the LED segment is polarized with a voltage V such that it acts as a light receiver. Preferably, the voltage V is negative for improving the light detection.

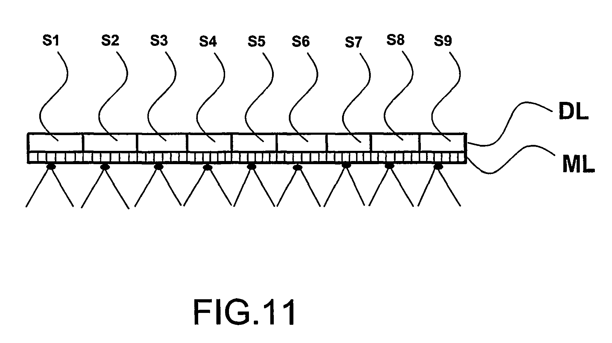

Fig.11 depicts a cross-section of an information carrier according to the invention. This information carrier comprises both means for representing stored data and means for detecting said data. This information carrier takes advantage of the small thickness of LED segments, which render it possible to stack LED segments and the mask layer for defining a single unit. This information carrier comprises a mask layer ML and a detection layer DL:
- the mask layer ML defines the data pattern of data which are intended to be stored. The mask layer may be made of glass or plastic, in which the data pattern is made of substantially transparent and non-transparent elementary areas representing the states of binary data to be stored. Alternatively, the substantially non-transparent elementary areas are made by a step of printing dark elementary areas on the surface of the detection layer DL (laser or inkjet printing).
- the detection layer DL is stacked on the mask layer ML and comprises LED segments S1-S9 acting as sensors (this number of segments being not limitative). For increasing the storage capacity, one segment is preferably sized (as shown) so as to face a matrix comprising a plurality of elementary areas (i.e. defining a plurality of bits) by the use of macro-cell scanning as described above. Alternatively, one segment is more basically sized for facing a single elementary area (i.e. defining a single bit) without the use of macro-cell scanning.

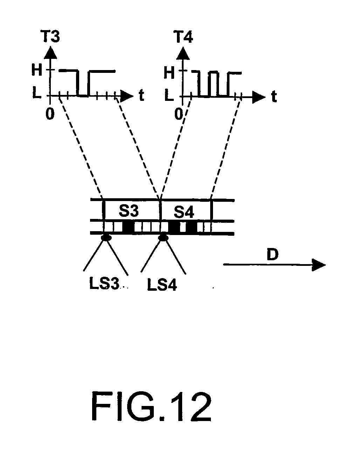

Fig.12 shows an example of the macro-cell scanning of two adjacent macro-cell data in an information carrier according to the invention as depicted in Fig.11. The data pattern is created by the mask layer attached to the detector and defining substantially non-transparent elementary areas (black squares) and substantially transparent elementary areas (white squares). Segment S3 faces a macro-cell data scanned optically by the light spot LS3, while segment S4 faces a macro-cell data scanned optically by the light spot LS4. The light spots are simultaneously and laterally displaced (by actuation means not shown) in the scanning direction D so that a light spot is applied to each elementary area of each macro-cell data. When an elementary area is scanned by a light spot, the corresponding segment generates a two-level output signal: a first level L if the scanned elementary area is substantially non-transparent and a second level H if the scanned elementary area is substantially transparent. Transmission output signals T3 and T4 can thus be generated, reflecting the binary data pattern stored in the mask layer.

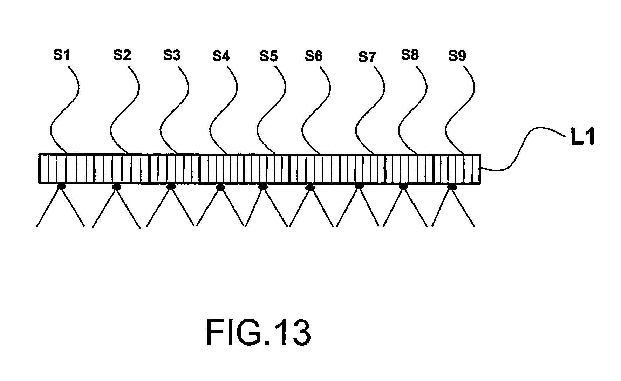

Fig.13 depicts a cross-section of an improved information carrier according to the invention comprising a single layer L1 made of organic photosensitive material. This single layer plays not only the role of a detector with LED segments acting as sensors, but also the role of a data medium since each segment comprises active and passive elementary areas for defining a data pattern.

The information carrier comprises segments S1-S9 (this number of segments being not limitative), each segment comprising a plurality of active and passive elementary areas represented by rectangles.

Active elementary areas correspond to areas where the properties of the LED segment remain unchanged. When an input light spot is applied to an active elementary area, an output signal having a first state is generated by the corresponding LED segment, so that a first state of the binary data is derived.

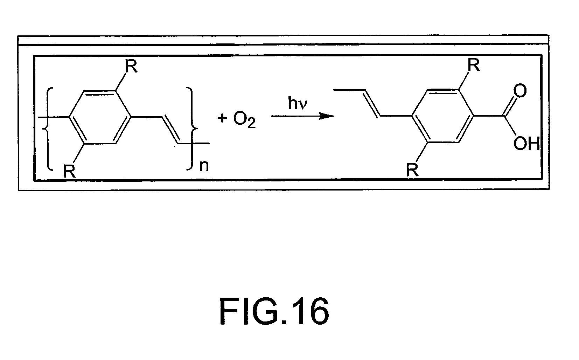

Passive elementary areas are realized by a method involving a local chemical modification step of the organic material. For example, the chemical modification may correspond to a destruction of the double bond, to a conductivity reduction of the organic material, to a modification of the absorption properties of the organic material, or to a photo-oxidization of the organic material obtained by a bleaching process in an oxygen atmosphere. The photo-oxidation of the polymer locally destroys and deactivates the polymer, which results in a locally high-impedance behavior, and does not give any current under irradiation of a light spot. When an input light spot is applied to a passive area, an output signal having a second state is generated by the corresponding LED segment so that a second state of the binary data is derived. The bleaching process thus results in a data pattern which can be easily read out and converted into a binary sequence for retrieving stored data from the layer L1. The data pattern may be written by a recorder apparatus that generates an ultraviolet radiation modulated by the data to be stored in an oxygen environment whose chemical reaction is illustrated by Fig.16. Alternatively, this step may be done during the manufacture of the information carrier.

Alternatively, the passive areas may be defined by a method comprising a step of suppressing one of the electrodes of the LED segment (i.e. the anode or the cathode), leading to local areas where only one electrode remains.

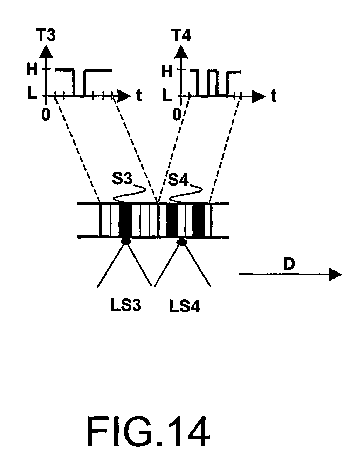

Fig.14 shows an example of the macro-cell scanning of two adjacent macro-cell data in an information carrier according to the invention as depicted in Fig. 13. The data pattern is created in that active elementary areas (white rectangles) and passive elementary areas (black rectangles) are defined in each LED segment. Sensor S3 faces a macro-cell data scanned optically by the light spot LS3, while sensor S4 faces a macro-cell data scanned optically by the light spot LS4. The light spots are simultaneously and laterally displaced (by actuation means not shown) in the scanning direction D so that a light spot is applied to each elementary area of each macro-cell data. When a light spot is applied to an elementary area, the corresponding segment generates a two-level output signal: a first level L if the scanned elementary area is passive and a second level H if the scanned elementary area is active. Transmission output signals T3 and T4 reflecting the binary data pattern stored in the layer L1 can thus be generated.

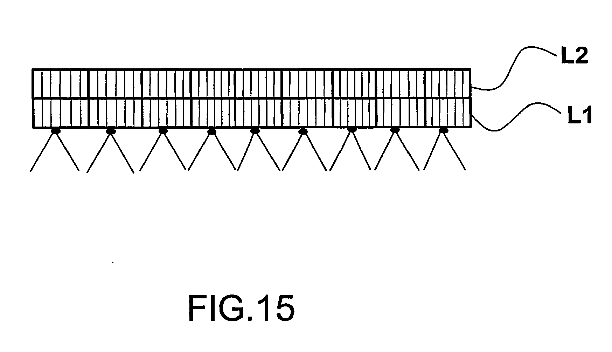

Fig.15 depicts another improved information carrier comprising a plurality of layers stacked on top of each other : a first layer L1 and a second layer L2 as shown in Fig.13. The number of layers in this Figure is limited to two for better understanding only.

This multilayer information carrier is made possible by the use of LED segments having a substantially transparent substrate and comprising substantially transparent electrodes, for example made of indium-tin oxide (ITO).

Preferably, the LED segments of the first layer L1 face the LED segments of the second layer L2. A single light spot is applied to elementary areas of the first layer L1, but since this layer is substantially transparent, the light spot is also simultaneously applied to elementary areas of the second layer L2. This renders it possible to generate simultaneously two output signals reflecting the binary data pattern stored in layer L1 and in layer L2.

Advantageously, a lock-in amplification may be performed for improving the signal-to-noise ratio of the readout signal generated by the LED segments. To this end, the frequency of the input light spots is modulated to a known high frequency, and then the readout signals generated by the LED segments are amplified around this known frequency.

The use of the verb "comprise" and its conjugations does not exclude the presence of elements or steps other than those stated in the claims. The use of the article "a" or "an" preceding an element or step does not exclude the presence of a plurality of such elements or steps.

## Claims

1. Information carrier comprising:
- a mask layer (ML) defining a data pattern,
- a detection layer (DL) stacked on said mask layer (ML) and comprising at least one segment made of organic photosensitive material embedded between electrodes for detecting said data pattern.

2. Information carrier as claimed in claim 1, wherein the data pattern is made of transparent and non-transparent elementary areas.

3. Information carrier as claimed in claim 1 or 2, wherein the at least one segment is sized such that it faces a plurality of said elementary areas.

4. Information carrier comprising a layer (L1) comprising at least one segment, said at least one segment comprising active and passive elementary areas for defining a data pattern, each active area yielding a higher electric current upon irradiation than any passive area, and said at least one segment being made of organic photosensitive material embedded between electrodes for detecting said data pattern.

5. Information carrier as claimed in claim 4, comprising a plurality of layers (L1, L2) stacked on top of each other, wherein each layer has the characteristics of the layer (L1) as specified in claim 4..

6. Information carrier as claimed in claim 4 or 5, wherein the passive elementary areas correspond to chemically modified areas of the organic photosensitive material, or to areas with only one electrode.

7. Information carrier as claimed in claim 1, 4 or 5, wherein the organic photosensitive material embedded between electrodes is composed of OLEDs, smOLEDs, PolyLED, LEECs, organic photovoltaic cells, or hybrid organic/inorganic solar Grätzel cells.

8. Method of modifying the data pattern in an information carrier as defined in claim 1, comprising the step of printing dark elementary areas on said detection layer (DL).

9. Method of modifying the data pattern in an information carrier as defined in claim 4, comprising the step of modifying the properties of said organic photosensitive material for creating passive elementary areas.

10. Method of modifying the data pattern in an information carrier as defined in claim 4, comprising the step of suppressing one or several of said electrodes for creating passive elementary areas.

## Patentansprüche

1. Informationsträger mit
- einer Maskenschicht (ML), die eine Datenstruktur definiert,
- einer Detektionsschicht (DL), die über der Maskenschicht (ML) angeordnet ist und mindestens ein Segment aus zwischen Elektroden eingebettetem, organischem, photoempfindlichem Material aufweist, um die Datenstruktur zu detektieren.

2. Informationsträger nach Anspruch 1, wobei die Datenstruktur aus transparenten und nicht transparenten, elementaren Flächen besteht.

3. Informationsträger nach Anspruch 1 oder 2, wobei das mindestens eine Segment so dimensioniert ist, dass es mehreren der elementaren Flächen zugewandt ist.

4. Informationsträger mit einer Schicht (L1) mit mindestens einem Segment, wobei das mindestens eine Segment aktive und passive, elementare Flächen aufweist, um eine Datenstruktur zu definieren, wobei jede aktive Fläche bei Bestrahlung einen höheren, elektrischen Strom als eine passive Fläche abgibt, und wobei das mindestens eine Segment aus zwischen Elektroden eingebettetem, organischem, photoempfindlichem Material besteht, um die Datenstruktur zu detektieren.

5. Informationsträger nach Anspruch 4 mit mehreren übereinander angeordneten Schichten (L1, L2), wobei jede Schicht die Charakteristiken der Schicht (L1), wie in Anspruch 4 spezifiziert, aufweist.

6. Informationsträger nach Anspruch 4 oder 5, wobei die passiven, elementaren Flächen chemisch modifizierten Flächen aus dem organischen, photoempfindlichen Material oder Flächen mit nur einer Elektrode entsprechen.

7. Informationsträger nach Anspruch 1, 4 oder 5, wobei sich das zwischen Elektroden eingebettete, organische, photoempfindliche Material aus OLEDs, SMOLEDs, PolyLEDs, LEECs, organischen Photoelementen oder hybriden, organischen/anorganischen Grätzel-Solarzellen zusammensetzt.

8. Verfahren zum Modifizieren der Datenstruktur in einem Informationsträger, wie in Anspruch 1 definiert, welches den Schritt des Druckens dunkler, elementarer Flächen auf die Detektionsschicht (DL) umfasst.

9. Verfahren zum Modifizieren der Datenstruktur in einem Informationsträger, wie in Anspruch 4 definiert, welches den Schritt des Modifizierens der Eigenschaften des organischen, photoempfindlichen Materials zur Erzeugung von passiven, elementaren Flächen umfasst.

10. Verfahren zum Modifizieren der Datenstruktur in einem Informationsträger, wie in Anspruch 4 definiert, welches den Schritt des Unterdrückens von einer oder mehreren der Elektroden zur Erzeugung von passiven, elementaren Flächen umfasst.

## Revendications

1. Support d'informations comprenant :
- une couche de masquage (ML) définissant un motif de données;
- une couche de détection (DL) empilée sur ladite couche de masquage (ML) et comprenant au moins un segment fait d'un matériau photosensible organique intégré entre des électrodes pour détecter ledit motif de données.

2. Support d'informations suivant la revendication 1, dans lequel le motif de données est fait de zones élémentaires transparentes et non transparentes.

3. Support d'informations suivant la revendication 1 ou 2, dans lequel le au moins un segment est d'une taille telle qu'il fait face à une pluralité desdites zones élémentaires.

4. Support d'informations comprenant une couche (L1) comprenant au moins un segment, ledit au moins un segment comprenant des zones élémentaires actives et passives pour définir un motif de données, chaque zone active produisant, lors d'une irradiation, un courant électrique supérieur à celui d'une zone passive quelconque, et ledit au moins un segment étant fait d'un matériau photosensible organique intégré entre des électrodes pour détecter ledit motif de données.

5. Support d'informations suivant la revendication 4, comprenant une pluralité de couches (L1, L2) empilées l'une par-dessus l'autre, dans lequel chaque couche présente les caractéristiques de la couche (L1) telle que spécifiée à la revendication 4.

6. Support d'informations suivant la revendication 4 ou 5, dans lequel les zones élémentaires passives correspondent à des zones modifiées chimiquement du matériau photosensible organique, ou à des zones ne comportant qu'une électrode.

7. Support d'informations suivant la revendication 1, 4 ou 5, dans lequel le matériau photosensible organique intégré entre des électrodes est composé de diodes électroluminescentes organiques (DELO), de diodes électroluminescentes organiques à petites molécules (smOLED), de diodes électroluminescentes polymères (DELP), de cellules électrochimiques électroluminescentes (LEEC), de cellules photovoltaïques organiques ou de cellules de Grätzel solaires organiques/inorganiques hybrides.

8. Procédé permettant de modifier le motif de données dans un support d'informations suivant la revendication 1, comprenant l'étape d'impression de zones élémentaires sombres sur ladite couche de détection (DL).

9. Procédé permettant de modifier le motif de données dans un support d'informations suivant la revendication 4, comprenant l'étape de modification des propriétés dudit matériau photosensible organique pour créer des zones élémentaires passives.

10. Procédé permettant de modifier le motif de données dans un support d'informations suivant la revendication 4, comprenant l'étape de suppression d'une ou de plusieurs desdites électrodes pour créer des zones élémentaires passives.
